**Europäisches Patentamt**

(19) **European Patent Office**

**Office européen des brevets**

(11) Veröffentlichungsnummer : **0 151 688 B1**

(12) **EUROPÄISCHE PATENTSCHRIFT**

(45) Veröffentlichungstag der Patentschrift :
09.08.89

(51) Int. Cl.⁴ : **F 16 K 15/14**

(21) Anmeldenummer : **84111951.4**

(22) Anmeldetag : **05.10.84**

(54) **Ventil zur Verhinderung des Rückflusses von flüssigen und gasförmigen Medien.**

(30) Priorität : **09.02.84 CH 625/84**

(43) Veröffentlichungstag der Anmeldung :
**21.08.85 Patentblatt 85/34**

(45) Bekanntmachung des Hinweises auf die Patenterteilung : **09.08.89 Patentblatt 89/32**

(84) Benannte Vertragsstaaten :
**BE DE FR GB IT NL SE**

(56) Entgegenhaltungen :
**DE–A– 2 819 900**
**DE–U– 1 892 014**
**GB–A– 1 357 249**
**US–A– 2 629 393**
**US–A– 3 179 124**
**US–A– 3 838 708**

(73) Patentinhaber : **Lasso Technik AG**
**Solothurnerstr. 72**
**CH-4053 Basel (CH)**

(72) Erfinder : **Rohrer, Gottfried**
**Niklaus von Flüestrasse 41**
**CH-4059 Basel (CH)**

(74) Vertreter : **EGLI-EUROPEAN PATENT ATTORNEYS**
**Horneggstrasse 4**
**CH-8008 Zürich (CH)**

## Beschreibung

Die Erfindung betrifft ein Ventil nach den Angaben des Oberbegriffs des Anspruches 1, wie es aus der US-A-2 629 393 bekannt ist.

Ventile zur Verhinderung des Rückflusses von flüssigen und gasförmigen Medien sind in verschiedenen Ausführungen bekannt. Bei einer weiteren bekannten Ausführungsform, die vor allem in Wasserleitungsnetzen von Häusern und Gebäuden zur Anwendung kommt, ist der Ventilsitz ein meist kegelförmiger, aus einem Blech geformter Hohlkörper, in dessen Wand Oeffnungen für den Durchfluss des Fluides angeordnet sind. Auf der ablaufseitigen Innenseite des Hohlkörpers ist eine ebenfalls als Kegel geformte, elastische Membran befestigt, die sich beim Durchfluss eines solchen Mediums durch die Oeffnungen vom Ventilsitz abhebt und sich auf diesen legt, sobald der Durchfluss unterbrochen wird (GB-PS 1 357 249). Die Durchflussöffnungen im Ventilsitz sollen einen möglichst unbehinderten Durchfluss gewährleisten und sind als längliche oder kreisförmige Oeffnungen ausgebildet. Zur Befestigung des Ventils in der Leitung ist der Ventilsitz an seinem Rand mit einem Flansch, einem Ring oder einem Schraubring versehen.

Es ist weiter ein Ventil für die Verhinderung des Rückflusses bekannt (US-PS 3 838 708), bei welchem der Ventilsitz aus einem aus Draht ein- oder mehrgängig gewickelten Körper in Form einer räumlichen Spirale gebildet ist, wobei zwischen den einzelnen Windungen der Drahtwicklung ein Ringspalt für den Fluiddurchgang besteht. Da ein solcher Drahtwickel nicht formstabil ist, ist er in einem Käfig mit längs den Mantellinien verlaufenden Stegen gelagert, wobei die einzelnen Windungen an den Stegen, z. B. durch Schweissen, befestigt werden. Trotz des hier benötigten Stützkäfigs ist der Herstellungaufwand geringer als beim vorher beschriebenen Ventil. Die elastische Verschlussmembran wird bei unterbrochenem Durchfluss in die zwischen den einzelnen Wicklungen gebildeten Ringspalten gedrückt, so dass die Gesamtlänge der Verschlussmembran dadurch verringert wird und die randnahen Ringspalten nicht mehr abgedeckt sind. Zudem führt dieses. Das Einpressen der Verschlussmembran in die Ringspalte kann zu einer Beschädigung derselben führen.

Hier setzt die Erfindung ein, der die Aufgabe zugrundeliegt, ein Ventil der eingangs beschriebenen Art so auszugestalten, dass ein geringer Aufwand für die Herstellung erforderlich ist und eine mit dem Ventilsitz zusammenwirkende Verschlussmembran bei unterbrochenem Fluiddurchfluss weder beschädigt noch in seiner Länge verringert wird.

Eine weitere Aufgabe der Erfindung ist die Schaffung eines Ventils zur Verhinderung des Rückflusses von Fluid, das einen geringen Durchflusswiderstand aufweist und deren Abschlussmembran bei Unterbrechung des Durchflusses rasch anspricht.

Diese Aufgabe wird durch die in Anspruch 1 enthaltenen Merkmale gelöst.

Die Erfindung ist in der Zeichnung in einem Ausführungsbeispiel und mit einigen Varianten davon dargestellt und nachfolgend beschrieben. Es zeigen :

Fig. 1 einen Längsschnitt eines Ventils zur Rückflussverhinderung mit einem mit dem Ventilkorb verschweissten Halteflansch,

Fig. 2-5 Teilschnitte eines Ventils, ähnlich demjenigen in Fig. 1, jedoch mit unterschiedlich ausgebildetem Halteflansch zur Befestigung des Ventils in einer Rohrleitung, wobei

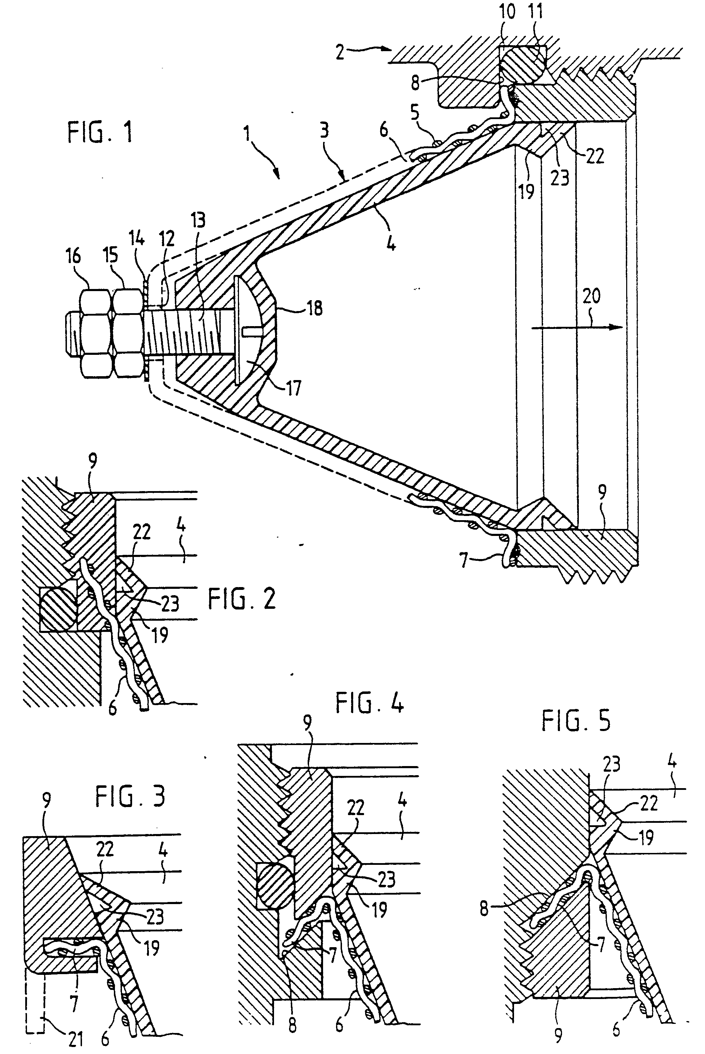

Fig. 2 einen Halteflansch aus Pressmaterial mit im Flanschkörper eingebetteten Rand des Ventilsitzes,

Fig. 3 einen Halteflansch, bei dem der Rand des Ventilsitzes am Halteflansch mittels eines Bördelrandes festgehalten ist,

Fig. 4 einen Halteflansch zum Festklemmen des Randes des Ventilsitzes und

Fig. 5 einen Halteflansch zum Festklemmen des Randes des Ventilsitzes, jedoch von der entgegengesetzten Seite wie in Fig. 5 zeigt.

Das in Fig. 1 dargestellte Ventil 1 ist in einer Leitung 2 (nur teilweise dargestellt) angeordnet. Die Leitung 2 ist gewöhnlich eine geschlossene Leitung, z. B. eine Rohrleitung, jedoch kann das Ventil 1 auch am Anfang einer Leitung angeordnet sein. Das Ventil 1 setzt sich aus einem Ventilsitz 3, einer Abschlussmembran 4 und einem Halteflansch 9 zusammen.

Der Ventilsitz 3 besteht aus einem aus Runddrähten 5 gefertigten Siebkorb 6. Der Siebkorb 6 kann sowohl als ebenes Sieb hergestellt und dann in einer Pressoperation zu einem korbförmigen Körper geformt als auch als Strumpf gewoben werden. Der Rand 7 des Siebkorbes 6 ist nach auswärts gebogen, so dass er auf eine in der Leitung (2) angebrachte Schulter 8 abgestützt werden kann, und mit dem Halteflansch 9 verschweisst, der in die Leitung 2 eingeschraubt ist. In der Wand der Leitung 2 ist weiter eine Nut 10 zur Aufnahme eines Weichdichtungsringes 11, z. B. eines O-Ringes, vorgesehen, der den Durchfluss von Fluid über den Rand 7 und das Gewinde des Halteflansches 9 verhindert.

Der Siebkorb 6 des Ventilsitzes 3 kann z. B. aus einem gewebten Sieb bestehen, dessen Schussdrähte und Kettdrähte senkrecht zueinander liegen und einander durchdringen. Die für die Siebbildung verwendeten Drähte sind zweckmässig Runddrähte, könnten jedoch, z. B. bei grösseren Dimensionen, auch ein anderes Profil, z. B. ein Ovalprofil, aufweisen. Die Siebdrähte 5 könnten jedoch auch in anderer Weise, z. B. unter Bildung von Maschen, ineinanderlaufen. Wesentlich ist, dass die Gesamtfläche der von den Drähten 5 gebildeten Sieböffnungen möglichst gross ist, die einzelnen Sieböffnungen eine strömungsgünstige Begrenzung aufweisen, wie dies beim Runddraht der Fall ist, und das Sieb eine grosse Zahl eng beieinander liegender Auflagepunkte für die Abschlussmembran 4 bietet. Die Drähte können aus Stahl, Metallen, reinem oder verstärktem Kunststoff o. dgl. hergestellt sein.

Der aus dem Siebkorb 6 gebildete Ventilsitz 3 weist an seiner Spitze eine Bohrung 12 auf, durch die eine Halteschraube 13 zum Halten der Abschlussmembran 4 durchgesteckt und mittels einer Scheibe 14 und einer Mutter 15 festgehalten und durch eine weitere Mutter 16 gesichert ist. Der Kopf 17 der Schraube 13 ist im Kopf der aus einem biegsamen Kunststoff hergestellten Abschlussmembran 4 eingebettet.

Die Abschlussmembran 4 weist wie der Ventilsitz eine keglige Form auf und ist so geformt, dass sie sich an die Innenseite des Ventilsitzes 3 anlegt. Die Abschlussmembran 4 weist an ihrem Rand einen Randwulst 19 auf, der sich an die Innenwand des Halteflansches 9 anlegt.

Beim Durchfluss durch das Ventil 1, strömt das flüssige oder gasförmige Medium in Richtung des Pfeils 20. Hierbei werden die Abschlussmembran 4 vom Ventilsitz 3 und deren Randwulst 19 von der Innenwand des Halteflansches 9 mindestens teilweise abgehoben. Bei unterbrochenem Durchfluss, d. h. wenn sich eine Strömung entgegen der Pfeilrichtung 20 ausbilden will, legen sich die Abschlussmembran 4 auf den Ventilsitz und der Randwulst 19 an die Innenwand des Halteflansches 9. Durch die verwobene bzw. vermaschte Anordnung der Drähte 5 des Siebkorbes 6 wird erreicht, dass um die Sieböffnungen eine Vielzahl von kleinen Auflageflächen vorhanden ist, so dass auch bei einem verhältnismässig grossen Schliessdruck die Abschlussmembran 4 sich ohne wesentliche Deformation auf den Ventilsitz 3 legt. Deshalb tritt keine Verminderung der Länge der Abschlussmembran 4 ein und dadurch wird der Randwulst 19 nicht zurückgeschoben, so dass im Bereich des Randes des Siebkorbes 6 keine Sieböffnungen freigeben werden. Durch die Verwendung des Siebkorbes 6 als Ventilsitz wird nun in überraschender Weise eine einwandfreie Funktion des Ventils 1 erreicht. Die grosse Zahl von Auflageflächen um die Sieböffnungen herum erlaubt sogar, die Wandstärke der Abschlussmembran auch bei hohen Schliessdrücken verhältnismässig klein zu halten. Das Sieb kann mit vergleichsweise geringem Aufwand maschinell hergestellt und auch maschinell in die gewünschte Hohlkörperform verpresst werden. Die Siebkörbe 6 gewährleiten eine ausreichende Formstabilität, so dass auf die Verwendung eines Käfigs zum Befestigen der Drähte verzichtet werden kann. Der Halteflansch 9 hat die Aufgabe, den Rand des Siebkorbes 6 so mit der Wand der Leitung 2 zu verbinden, dass der Durchfluss ausschliesslich durch das Ventil 1 erfolgt.

Hier sind verschiedene Lösungen möglich, von denen einige in den Figuren 1-5 dargestellt sind. Zunächst ist es möglich, diesen Rand als flanschähnlichen Rand 7 auszubilden und durch Schweissen oder Löten mit dem Halteflansch 9 zu verbinden, siehe Fig. 1, wobei der Rand 7 auf die Schulter 8 abgestützt und mit dem Halteflansch 9 festgezogen wird. Eine Klemmverbindung unter Verwendung eines als Schraubflansch ausgebildeten Halteflansches 9 zeigen Fig. 4 und 5. Im Gegensatz zu Fig. 1 ist hier der Rand 7 stärker abgebogen als in Fig. 1, wodurch auch ohne Schweissen oder Löten praktisch eine formschlüssige Verbindung erreicht wird. Die Ausführung nach Fig. 5 unterscheidet sich von den Ausführungen nach Fig. 1 und 4 lediglich dadurch, dass der Halteflansch 9 von der entgegengesetzten Seite eingeschraubt wird.

Bei der Ausführung nach Fig. 2 besteht der Halteflansch 9 aus einem Pressmaterial, z. B. Kunststoff, Pressmessing o. dgl. Bei seiner Herstellung wird der Rand des Siebkorbes 6 in die Form eingelegt, so dass er beim Spritzen oder Pressen in das Pressmaterial des Halteflansches 9 eingebettet wird.

Bei der Ausführung nach Fig. 3 wird der Halteflansch 9 mit einem Bördelflansch 21 ausgebildet, der um den Rand 7 des Siebkorbes 6 abgebogen wird, wodurch ebenfalls eine zuverlässige Verbindung erreicht wird. Die Innenwand des Halteflansches 9 kann, siehe Fig. 3, konisch ausgebildet sein und schliesst dann bündig an den Siebkorb 6 an, so dass die Mantellinien der Abschlussmembran 4 und des Randwulstes 9 auf einer Geraden liegen.

Damit das Ventil 1 einen geringen Durchflusswiderstand aufweist, ist die Abschlussmembran 4 mit dem Randwulst 19 möglichst elastisch auszubilden. Vor allem soll der Randwulst 19 so ausgebildet sein, dass er einerseits einen raschen Abschluss bei unterbrochenem Durchfluss herbeiführt und andererseits ausreichend flexibel ist. Dazu wird der Randwulst 19 mit einer Dichtlippe 22 versehen, die auf der Innenseite unter Bildung eines aussenseitigen, ringförmigen Einschnittes 23 in den Randwulst 19 übergeht. Die Dichtlippe 22 ist flexibler als der Randwulst 19, so dass bei unterbrochenem Durchfluss durch das Ventil 1 die Dichtlippe 22 sich nach aussen wölbt, den Durchfluss an der Innenseite des Halteflansches 9 drosselt und dadurch ein rasches Anpressen des Randwulstes 19 bewirkt. Durch die Bildung der Dichtlippe 22 am Randwulst 19 wird in überaschender Weise der Durchflusswiderstand des Ventils 1 verringert und gleichzeitig ein rascheres Schliessen des Ventils 1 erreicht.

## Patentansprüche

1. Ventil zur Verhinderung des Rückflusses von flüssigen und gasförmigen Medien in einer geschlossenen Leitung (2), dessen Sitz als Siebkorb mit einem Sieb aus ineinanderlaufenden Drähten (5) ausgebildet ist, auf dessen ablaufseitiger Innenseite bei unterbrochenem Durchfluss durch das Ventil eine elastische Abschlussmembran zur Rückflussverhinderung sich abzustützen bestimmt ist, dadurch gekennzeichnet, dass der Siebkorb (6) an der Wand der Leitung (2) mittels eines Halteflansches (9) festgehalten ist, dass die elastische Abschlussmembran (4) an ihrem Rand einen Randwulst (19) aufweist, der mit einer Schliesslippe (22) versehen ist, und daß der Randwulst mit Schließlippe an einer der Wand der Leitung (2) oder dem Halteflansch (9) zugeordneten Dichtfläche aufliegt.

2. Ventil nach Anspruch 1, dadurch gekennzeichnet, dass die ineinanderlaufenden Drähte (5) als Schuss und Kette eines gewebten Siebes angeordnet sind.

3. Ventil nach Anspruch 1, dadurch gekennzeichnet, dass die ineinanderlaufenden Drähte (5) miteinander vermaschte Drähte sind.

4. Ventil nach einem der Ansprüche 1 bis 3, dadurch gekennzeichnet, dass die ineinanderlaufenden Drähte Rund- oder Profildrähte sind.

5. Ventil nach Anspruch 1, dadurch gekennzeichnet, dass der Halteflansch (9) ein in die Wand der Leitung (2) einschraubbarer Klemmring ist, mittels welchem der Rand (7) des an einer Schulter (8) der Wand der Leitung (2) abgestützten Siebkorbes (6) geklemmt ist (Fig. 1, 4 und 5).

6. Ventil nach Anspruch 1, dadurch gekennzeichnet, dass der Halteflansch (9) ein aus Pressmaterial geformter Flansch ist, in dem der Rand (7) des Siebkorbes (6) verankert ist (Fig. 2).

7. Ventil nach Anspruch 1, dadurch gekennzeichnet, dass der Halteflansch (9) einen den Rand (7) des Siebkorbes (6) an den Halteflansch klemmenden Bördelbzw. Falzrand (21) aufweist (Fig. 3).

8. Ventil nach Anspruch 1, dadurch gekennzeichnet, dass die Schliesslippe (22) an der Innenseite mit dem Randwulst (19) verbunden ist und als ein gegen die Wulstaussenseite sich erstreckender, frei beweglicher Flansch ausgebildet ist.

## Claims

1. Valve for prevention of backflow of liquid and gaseous media in a closed conduit (2) the seating of which is constructed as a mesh basket with a mesh of wires running in and out of one another (5) on the downstream side interior side of which is set for interrupted throughflow through the valve an elastic closure membrane for backflow prevention, characterised in that the sieve basket (6) is held fixed against the wall of the conduit (2) by means of a mounting flange (9), that the elastic closure membrane (4) at its edge has an edge bead (19) which is provided with a closure lip (22) and that the edge bead with closure lip lies against sealing surfaces arranged in the wall of the conduit (2) or of the mounting flange (9).

2. Valve according to Claim 1, characterised in that the wires running in and out of one another (5) are arranged as warp and weft of a woven mesh.

3. Valve according to Claim 1, characterised in that the wires (5) running in and out of one another are intermeshed wires.

4. Valve according to one of Claims 1 to 3, characterised in that the wires running in and out of one another are round or shaped wires.

5. Valve according to Claim 1, characterised in that the mounting flange (9) is a clamping ring which may be screwed into the wall of the conduit (2) by means of which the edge (7) of the mesh basket (6) supported on a shoulder (8) of the wall of the conduit (2) (Figs. 1, 4 and 5).

6. Valve according to Claim 1, characterised in that the mounting flange (9) is a flange formed of mouldable material in which the edge (7) of the mesh basket (6) is anchored (Fig. 2).

7. Valve according to Claim 1, characterised in that the mounting flange (9) has a swaged or folded-over edge (21) clamping the edge (7) of the mesh basket (6) against the mounting flange (Fig. 3).

8. Valve according to Claim 1, characterised in that the closure lip (22) on the inside is connected with the edge bead (19) and is formed as a freely movable flange extending against the outer side of the bead.

## Revendications

1. Soupape pour éviter le reflux de liquides et de gaz dans une canalisation fermée (2), dont le siège est constitué par un panier filtrant comportant un filtre, formé de fils (5) entrecroisés, sur la paroi intérieure duquel s'applique, lorsque le passage du fluide dans la soupape s'interrompt, une membrane de fermeture élastique destinée à empêcher le reflux, caractérisée en ce que le panier filtrant (6) est fixé à la paroi de la canalisation (2) au moyen d'une bride de maintien (9), en ce que la membrane de fermeture élastique (4) comporte, au niveau de son bord, un bourrelet marginal (19) comprenant une lèvre de fermeture (22) et en ce que ce bourrelet marginal s'applique, par cette lèvre de fermeture, contre une surface de joint associée à l'une des parois de la canalisation (2) ou à la bride de maintien.

2. Soupape selon la revendication 1, caractérisée en ce que les fils entrecroisés (5) sont disposés comme la trame et la chaîne d'un filtre tissé.

3. Soupape selon la revendication 1, caractérisée en ce que les fils entrecroisés (5) constituent des mailles.

4. Soupape selon l'une des revendications 1 à 3, caractérisée en ce que les fils entrecroisés sont des fils ronds ou profilés.

5. Soupape selon la revendication 1, caractérisée en ce que la bride de maintien (9) est une vis de serrage qui peut se visser dans la paroi de la canalisation (2) et qui assure le serrage du bord (7) du panier filtrant (6) qui prend appui contre un épaulement (8) de la paroi de la canalisation (2) (figures 1, 4 et 5).

6. Soupape selon la revendication 1, caractérisée en ce que la bride de maintien (9) est une bride moulée en matériau comprimé dans lequel le bord (7) du panier filtrant (6) est inséré (figure 2).

7. Soupape selon la revendication 1, caractérisée en ce que la bride de maintien (9) comporte un bord rabattu ou plié (21) qui serre le bord (7) du panier filtrant (6) contre la bride de maintien (figure 3).

8. Soupape selon la revendication 1, caractérisée en ce que la lèvre de fermeture (22) est reliée par son côté intérieur, au bourrelet marginal (19) et constitue une bride mobile qui s'étend vers le côté extérieur du bourrelet.

FIG. 1

FIG. 2

FIG. 3

FIG. 4

FIG. 5